# EUROPÄISCHE PATENTSCHRIFT

(11) **EP 1 672 335 B1**
(45) Veröffentlichungstag und Bekanntmachung des Hinweises auf die Patenterteilung: **15.08.2007**
(21) Anmeldenummer: 04106570.7
(22) Anmeldetag: 14.12.2004
(51) Int. Cl.: G01G 23/00

(54) **Wägemodul mit einer positionspräzisen Überlastschutzvorrichtung**
Weighing module having an overload protection arrangement
Module de pesée muni d'un dispositif anti-surchage

(43) Veröffentlichungstag der Anmeldung: 21.06.2006
(73) Patentinhaber: Mettler-Toledo AG, 8606 Greifensee (CH)
(72) Erfinder: Burkhard, Hans-Rudolf, 8492, Wila (CH); Metzger, Andreas, 8708, Männedorf (CH); Schilling, Peter, 8854, Siebnen (CH)

(56) Entgegenhaltungen:
- DE-A1- 10 156 013
- DE-U1- 29 702 954
- DE-U1- 29 822 663
- PATENT ABSTRACTS OF JAPAN Bd. 011, Nr. 142 (P-573), 9. Mai 1987 (1987-05-09) & JP 61 278719 A (SHIMADZU CORP), 9. Dezember 1986 (1986-12-09)

## Beschreibung

Die vorliegende Erfindung bezieht sich auf ein Wägemodul, das mit einer zwischen der Wägezelle und dem Lastaufnehmer, angeordneten, positionspräzisen Überlastschutzvorrichtung versehen ist.

Die Funktion eines Überlastschutzes in einer Waage ist die Entkopplung des Lastaufnehmers, insbesondere der Waagschale, von der Wägezelle bei Überschreiten einer zulässigen Höchstlast, wobei deren Kraft weitgehend vertikal auf die Waagschale wirkt. Dabei wird die Wägezelle vor der Wirkung zu hoher, überwiegend vertikal eingeleiteter Kräfte geschützt, die entweder statisch durch ein eine Höchstlast überschreitendes Gewicht, oder dynamisch durch eine beispielsweise zu schnell aufgelegte Last hervorgerufen werden kann. Es können aber auch Querkräfte auf den Lastaufnehmer wirken, die bei fehlender Entkopplungsmöglichkeit über das Kraftübertragungsgestänge an die Wägezelle weitergeleitet werden und an der empfindlichen Wägezellenmechanik Schäden verursachen können.

Ein solcher Überlastschutz für eine Präzisionswaage ist in CH576634 A5 offenbart. In dieser Patentschrift ist die Waagschale zweiteilig ausgebildet. Die das Wägegut aufnehmende Schale liegt auf einem Unterteil aus Leichtmetallblech; das Unterteil weist einen Aussenring auf, der nur wenige Millimeter über dem Gehäuse der Waage endet. Zentrisch zum Aussenring ist in einer Bohrung mit Spiel ein Hohlbolzen eingeführt, der mit einem Kragen auf dem Unterteil lose aufliegt. Am Schaft des Hohlbolzens ist ein Sicherungsring eingelassen. Zwischen dem Sicherungsring und dem Unterteil ist zudem eine sternförmig ausgebildete Blattfeder gefangen, welche mit den Enden ihrer Arme das Unterteil gegen den Kragen des Bolzens nach oben drückt. Die Vorspannung der sternförmigen Blattfeder ist so bemessen, dass die durch sie ausgeübte Kraft auf das Unterteil grösser ist als die spezifizierte Maximallast der Präzisionswaage. Beim Wägen innerhalb des Wägebereiches der Waage bleibt folglich das Unterteil am Kragen anliegend gehalten und die Feder übt keinen Einfluss auf das Wägergebnis aus. Bei einer aussenmittigen Belastung der Waagschale, insbesondere auch bei einer solchen, die zudem den Wägebereich der Waage überschreitet, kann die Waagschale auf der belasteten Seite kippen und deren Unterteil gelangt in Anlage mit dem Waagengehäuse. Eine Beschädigung von mechanischen Elementen der Wägezelle z. B. von Parallelogramm- Schenkeln, ParallelogrammLenkern, Biegestellen usw., wird dadurch vermieden. Diese bekannte Vorrichtung erfüllt ihren Zweck solange die Überlast im Wesentlichen in Lastrichtung auf die Waagschale wirkt. Eine orthogonal oder nahezu orthogonal zur Lastrichtung eingeleitete Kraft wird durch die gefederte Auflage der Waagschale nicht aufgenommen, sondern direkt in das Kraftübertragungsgestänge eingeleitet und auf die empfindliche Wägezellenmechanik übertragen.

In DE 297 02 954 U1 wird eine Überlastsicherung für die Waagschale einer oberschaligen Waage mit einer vorgespannten Druckfeder, die die Waagschale im zulässigen Wägebereich spielfrei und quasi starr mit dem Lastaufnehmer des Wägesystems verbindet und bei überschreiten des zulässigen Wägebereiches elastisch nachgibt, offenbart. Durch ein konisch ausgebildetes Druckstück und ein damit korrespondierendes Formteil wird eine kippstabile Verbindung von Wagschale und Lastaufnehmer geschaffen, die zudem im zulässigen Wägebereich spielfrei ist.

In CH687421 A5 wird eine Präzisionswaage offenbart, deren Lastaufnehmer über das Kraftübertragungsgestänge mit dem Lastaufnahmebereich der Wägezelle relativ beweglich zu diesem verbunden ist. Der Lastaufnehmer überspannt den Lastaufnahmebereich der Wägezelle jochartig und liegt auf den zwei Enden zweier, das Kraftübertragungsgestänge bildende, angelenkte und durch eine Feder vorgespannte Arme auf. Exzentrisch oder schräg in die Waagschale eingeleitete Kräfte bewirken ein Verschwenken des Lastaufnehmers, welcher mit seinen nach unten abstehenden Stützschenkeln auf dem im Überlastbereich elastisch nachgebenden Kraftübertragungsgestänge abgestützt ist. Diese Überlastschutzvorrichtung kann in der offenbarten Ausführung jedoch nur von der Seite beaufschlagte Querkräfte aufnehmen, nicht aber Querkräfte von vorne und hinten. Bei Querkraftbelastungen von vorne oder von hinten wird die Waagschale nicht ausgelenkt sondern die Stiftverbindung an der Vorderseite der Waagschale überträgt die Querkräfte direkt auf die Wägezellenmechanik. Da diese Überlastsicherung üblicherweise bei Waagen mit einem Windschutz verwendet wird, erfolgt die Beschickung der Waagschale von der Seite und somit sind Querkräfte primär aus diesen Richtungen zu erwarten.

Die JP2564791 B2 offenbart eine Kraftmessvorrichtung mit einer einen Lastaufnahmebereich und einen feststehenden Bereich aufweisenden Wägezelle, einem Lastaufnehmer und einem zwischen dem Lastaufnehmer und dem Lastaufnahmebereich angeordneten Kraftübertragungsgestänge mit einer darin integrierten Überlastschutzvorrichtung zum Schutz der Wägezelle vor Überlastung durch statische und dynamische Kräfte, worin ein elastisches Element den Lastaufnehmer gegenüber dem Lastaufnahmebereich vorspannt. Die im Patent beschriebene Anordnung der Elemente lässt somit ebenfalls bei Überlast und/oder bei auftretenden Querkräften eine Einfederung beziehungsweise Auslenkung bis hin zu einem gehäusefesten Anschlag zu. Der erste Nachteil dieser Ausführung liegt darin, dass bei hohen Querkräften das Kraftübertragungsgestänge infolge der Auslenkung am gehäusefesten Anschlag ansteht und die Querkräfte als Zug beziehungsweise Druckkräfte auf die Wägezellenmechanik übertragen werden. Der zweite Nachteil der dargelegten Ausführung liegt in der für einige Anwendungen mangelhaften Koaxialität der Achse des Kraftübertragungsgestänges zur Achse der das Kraftübertragungsgestänge umschliessenden Bohrung des Lastaufnahmebereichs der Wägezelle. Die Bohrung muss zwangsläufig gegenüber dem Kraftübertragungsgestänge ausreichend Spiel aufweisen, um eine Auslenkung des Kraftübertragungsgestänges in der dargestellten Art zu ermöglichen. Der dritte Nachteil liegt darin, dass sich die vorliegende Konstruktion nicht eignet, Zugkräfte am Lastaufnehmer die gegen die Lastrichtung wirken von der Wägezelle zu entkoppeln.

Häufig ist es notwendig, einen an die Anwendung des Wägemoduls angepassten Aufbau am Lastaufnehmer zu befestigen. Dabei befindet sich dieser Aufbau, aufgrund der hohen Anforderungen an die Reproduzierbarkeit einer Wägung, vorzugsweise in einer festen Verbindung mit dem Lastaufnehmer. In einem solchen Fall besteht jedoch die Notwendigkeit eines Schutzes der Wägezelle vor einer Beschädigung aufgrund von orthogonal zur eingeleiteten Kraft wirkenden Drehmomenten, beispielsweise hervorgerufen durch tangential am Lastaufnehmer angreifende Kräfte. Solche Kräfte treten insbesondere dann auf, wenn vorgesehen ist, einen Aufbau, insbesondere eine Waagschale oder einen Adapter, auf den Lastaufnehmer aufzuschrauben. Ein solcher Überlastschutz für eine Kraftmessvorrichtung ist in der DE10156013 A offenbart.

Für eine Integration in automatisierte Produktions- und Testanlagen sind insbesondere Waagen in modularer Ausführung - so genannte Wägemodule geeignet. Dabei handelt es sich im Wesentlichen um Waagen, bei denen die Anzeigeeinheit von der Waage getrennt angeordnet ist, so zum Beispiel in einer Anlage mit einer zentralen Anzeige für mehrere Wägemodule. Ein Einsatz von solch integrierten Wägemodulen findet man bevorzugt in Anlagen für die Produktion und Überprüfung von kleinen, teueren Teilen, beispielsweise in Abfüll- und Verpackungsmaschinen für Tabletten, Ampullen, Kapseln usw., in der Pharmaindustrie oder bei der Kontrolle von Kugellagern.

Um das parallele Messen der Einzelmassen gleichgearteter Wägegüter zu ermöglichen, bietet sich eine flächige (matrixartige) Anordnung mehrerer Wägemodule auf kleinem Raum an. Da diese Wägegüter mittels einer Beschickungsvorrichtung, beispielsweise einem Roboterarm mit Mehrfachgreifer, parallel auf die einzelnen Lastaufnehmer der Wägemodule aufgebracht beziehungsweise nach dem Wägevorgang wieder entfernt werden, müssen die Positionen der einzelnen Lastaufnehmer zueinander und gegenüber der Beschickungseinrichtung genau definiert und die Lastaufnehmer während des Wägebetriebs mindestens in der Ebene orthogonal zur Lastrichtung dauerhaft positioniert sein. Bei der Beschickung mittels Roboterarm kann bei fehlerhafter Funktion der Beschickungseinrichtung in beliebiger Richtung eine Überlast, Zugkraft oder Querlast auf die Lastaufnehmer wirken und das kann zu einer Beeinträchtigung der Wägeperformance führen. Aus dem Stand der Technik ist keine Lösung bekannt, die für ein solches Einsatzgebiet die notwendige Ausgestaltung besitzt.
Aufgabe der vorliegenden Erfindung ist es daher, ein Wägemodul vorzuschlagen, dessen Überlastschutzvorrichtung mindestens eine Überlast in Lastrichtung, Querkräfte orthogonal zur Lastrichtung sowie Drehmomente infolge der Montage und/oder Demontage von Lastaufnehmern am Kraftübertragungsgestänge von der Wägezelle entkoppelt. Um mit den Wägevorgängen unmittelbar nach dem Ansprechen der Überlastsicherung infolge zusätzlich einwirkender Kräfte fortfahren zu können muss sichergestellt werden, dass der Lastaufnehmer nach dem Nachlassen der Kräfte wieder in die ursprüngliche Position zurückkehrt. Das auf einem Wägemodulträger befestigte Wägemodul darf sich trotz am Lastaufnehmer auftretender Querkräfte nicht gegenüber dem Wägemodulträger verschieben. Es sind zudem geeignete Mittel vorzusehen, welche die genaue Positionierung des Wägemoduls in der Einsatzumgebung vor dessen Einbau ermöglichen, um bei der Montage des Wägemoduls in der Einsatzumgebung Einstellarbeiten zu verhindern.

Diese Aufgabe wird erfindungsgemäss mit einem Wägemodul gemäss dem Anspruch 1 gelöst.

Das erfindungsgemässe Wägemodul mit einer einen Lastaufnahmebereich und einen feststehenden Bereich aufweisenden Wägezelle, einem Lastaufnehmer und einem zwischen dem Lastaufnehmer und dem Lastaufnahmebereich angeordneten Kraftübertragungsgestänge weist eine im Kraftübertragungsgestänge integrierte Überlastschutzvorrichtung zum Schutz der Wägezelle vor Überlastung durch statische und dynamische Kräfte auf. Die Überlastschutzvorrichtung besteht im Wesentlichen aus einem Fixierglied und einem den Lastaufnehmer gegenüber dem Lastaufnahmebereich in der Ebene orthogonal zur Lastrichtung präzis positionierenden Positionierelement, wobei der Kraftfluss in Lastrichtung vom Lastaufnehmer an den Lastaufnahmebereich durch ein elastisches Element übertragen wird. Der Lastaufnehmer ist dadurch bei die Spannkraft des elastischen Elements übersteigenden Kräften in Lastrichtung verschiebbar und bei Kräften orthogonal zur Lastrichtung aufgrund einer zwischen dem Positionierelement und dem Lastaufnahmebereich ausgebildeten Freistellung in alle Richtungen kippbar. Je nach Ausgestaltung der Überlastschutzvorrichtung werden auch Kräfte die entgegen der Lastrichtung am Lastaufnehmer angreifen, von der Wägezelle entkoppelt.

Damit das Wägemodul passgenau in die Einsatzumgebung eingebaut werden kann und ortsfest verankert ist, ist eine Vorrichtung zur Positionierung des Wägemoduls vorzusehen, deren Position in räumlichem Bezug zur Position des Lastaufnehmers steht. Idealerweise sind der Lastaufnehmer und diese Positionierungsvorrichtung des Wägemoduls auf derselben Mittellängsachse angeordnet. Dadurch lassen sich bei Mehrfachanordnungen von Wägemodulen die Positionen der einzelnen Lastaufnehmer zueinander über das Lochbild des Wägemodulträgers genau definieren, wobei die eigentliche Lage des Wägemoduls, auf der Ebene orthogonal zur Mittellängsachse, unerheblich ist. Als Lochbild wird eine definierte geometrische Anordnung von Bohrungen zueinander in einem Körper, zum Beispiel in einer Platte, bezeichnet. Nebst der einfachen Positionierung und Montage dieses mit einer Positionierungsvorrichtung versehenen Wägemoduls verschiebt sich die Mittellängsachse des Wägemoduls beim Auftreten von Querkräften gegenüber dessen Umgebung nicht, da durch die Positionierungsvorrichtung des Wägemoduls eine für die Festlegung der Mittellängsachse formschlüssige Verbindung mit der Umgebung des Wägemoduls insbesondere des Wägemodulträgers besteht.

In diesem Zusammenhang ist der Lastaufnehmer als eine das Wägegut für eine Wägung aufnehmende Vorrichtung jedweder Form zu betrachten, insbesondere ist hier auch eine Lastaufnahme-Plattform, auf welcher auch ein Aufbau befestigt werden kann, oder der Begriff Waagschale eingeschlossen. Ebenso kann auf dem Lastaufnehmer selbst noch ein zusätzlicher Aufbau oder Adapter angebracht sein.

Es ist bezüglich der Funktion der Überlastschutzvorrichtung unerheblich, ob das Positionierelement mit dem Lastaufnehmer oder mit dem Fixierglied fest verbunden ist und das Gegenstück zum Positionierelement, beispielsweise eine Hülse mit dem Fixierglied beziehungsweise mit dem Lastaufnehmer fest verbunden ist. In beiden Ausgestaltungen wird die Hülse durch das Positionierelement in der Ebene orthogonal zur Lastrichtung spielfrei positioniert und gegen und/oder in Lastrichtung spielfrei verschiebbar geführt, wobei der Lastaufnehmer bei Überlast in Lastrichtung mit einem Gehäuseteil in Anlage gelangt und bei Querkräften orthogonal zur Lastrichtung in alle Richtungen kippen kann.

In einer ersten Ausgestaltung der Erfindung weist das erfindungsgemässe Wägemodul mit einer einen Lastaufnahmebereich und einen feststehenden Bereich aufweisenden Wägezelle, einem Lastaufnehmer und einem zwischen dem Lastaufnehmer und dem Lastaufnahmebereich angeordneten Kraftübertragungsgestänge, eine im Kraftübertragungsgestänge integrierte Überlastschutzvorrichtung zum Schutz der Wägezelle vor Überlastung durch statische und dynamische Kräfte auf. Die Überlastschutzvorrichtung besteht im Wesentlichen aus einer Hülse, einem Formkörper und einem elastischen Element wobei das elastische Element den Anschlag des Formkörpers mit dem Anschlag der Hülse in Anlage bringt und damit den Lastaufnehmer gegenüber dem Lastaufnahmebereich vorspannt. Die Hülse wird mittels des Formkörpers in Lastrichtung spielfrei geführt und in der Arbeitsstellung des Lastaufnehmers positioniert. Der Lastaufnehmer ist dadurch bei die Vorspannkraft des elastischen Elements übersteigenden Kräften in Lastrichtung verschiebbar und orthogonal zur Lastrichtung in alle Richtungen kippbar. Ein im Innern der Hülse ausgebildeter Anschlag weist eine ringförmige, orthogonal zur Lastrichtung liegende Fläche oder Linie auf, wobei entweder am Lastaufnehmer oder am Fixierglied ein Positionierelement mit gegen den Anschlag gerichtetem, mindestens drei Auflagestellen aufweisendem Gegenanschlag angebracht oder ausgebildet ist. Die grössten, orthogonal zur Lastrichtung liegenden Ausdehnungen des Positionierelements im Bereich von mindestens drei Berührungsstellen mit der Hülseninnenwand sind im Wesentlichen gleich gross wie die Ausdehnungen, vorzugsweise der Innendurchmesser der Hülse in diesen Bereichen. Zweckmässigerweise ist die Hülse rotationssymmetrisch ausgeführt, wobei die Hülseninnenwand sowohl zylindrisch als auch in beliebiger Form / Kontur / Profil, insbesondere im Bereich des Positionierelements zwecks ausreichender Freistellung, ausgestaltet sein kann.

In einer zweiten Ausgestaltung der Erfindung ist das Positionierelement derart angeordnet, dass die in Richtung der Krafteinleitung in die Wägezelle verlaufenden Mittellängsachsen von Fixierglied, Positionierelement und Lastaufnehmer zusammenfallen. Das Positionierelement ist vorzugsweise rotationssymmetrisch, kegelstumpfförmig ausgebildet, wobei die mindestens drei Auflagestellen des Gegenanschlages als Basis dienen.

In einer dritten Ausgestaltung der Erfindung liegen die Auflagepunkte des Gegenanschlages auf einer Kreisringfläche oder eine Kreisringlinie. Vorzugsweise ist das im Bereich des Kraftübertragungsgestänges des Wägemoduls angeordnete elastische Element eine Schraubendruckfeder.

In einer vierten Ausgestaltung der Erfindung kann die Überlastschutzvorrichtung auch am Lastaufnehmer angreifende Zugkräfte vom Lastaufnahmebereich der Wägezelle entkoppeln indem die Überlastschutzvorrichtung um eine Linearführung und ein Federelement ergänzt wird. Bei dieser Ausgestaltung ist sowohl die Rückstellkraft des elastischen Elementes als auch die Rückstellkraft des Federelementes individuell einstellbar und die Lage des Lastaufnehmers gegenüber dem Lastaufnahmebereich in Lastrichtung wird durch Anschläge definiert.

In einer fünften Ausgestaltung der Erfindung ist das elastische Element so angeordnet und ausgelegt, dass es in Lastrichtung und gegen die Lastrichtung wirken kann. Im unbelasteten Zustand definiert das elastische Element somit die Lage des Lastaufnehmers gegenüber dem Lastaufnahmebereich in Lastrichtung. Die spielfreie Positionierung in der Ebene orthogonal zur Lastrichtung wird durch das Positionierelement sichergestellt. Das elastische Element ist nicht mehr einstellbar.

In einer sechsten Ausgestaltung der Erfindung weist das Positionierelement zusätzlich elastische Eigenschaften auf und ersetzt damit das elastische Element. Das Positionierelement positioniert den Lastaufnehmer gegenüber dem Lastaufnahmebereich der Wägezelle spielfrei im unbelasteten Zustand in drei Dimensionen. Das elastische Element ist nicht mehr einstellbar.

In einer bevorzugten Ausführung der Erfindung ist ein mit dem Gehäuse des Wägemoduls, vorzugsweise dessen Bodenteil starr verbundenes Bauteil vorhanden, das einen Gehäuseanschlag aufweist, der die lineare Bewegung und die Auslenkung des Lastaufnehmers begrenzt.

Vorzugsweise verfügt die Überlastsicherung zusätzlich über eine Verdrehbegrenzung gegen zu hohe orthogonal zur Lastrichtung wirkende, insbesondere tangential am Lastaufnehmer angreifende Kräfte, wobei die Verdrehbegrenzung in eine gehäusefeste, der Verdrehbegrenzung entsprechende Kontur, beispielsweise eine Aussparung oder Nut, eingreift. Die Mittel zur Begrenzung einer Verdrehung des Lastaufnahmebereiches gegenüber dem feststehenden Bereich bewirken, dass beim Befestigen, insbesondere beim Festschrauben eines Aufbaus auf den Lastaufnehmer infolge eines zu grossen Moments, im Sinne einer Momentkopplung über das elastische Element die Wägezelle nicht durch laterale Kräfte irreversibel deformiert wird. Die Folge einer solchen irreversiblen Verformung der Wägezelle würde sich zumindest in einer Verfälschung des Wägergebnisses niederschlagen, im schlimmsten Fall in einer Zerstörung der Wägezelle. Sofern das elastische Element derart angeordnet ist, dass keine Drehmomente auf den Lastaufnahmebereich übertragen werden können, muss im Falle des Festschraubens eines Aufbaus auf den Lastaufnehmer derselbe dem beaufschlagten Drehmoment entgegenwirken. Um nicht zusätzliche Hilfsmittel wie zum Beispiel einen Schraubenschlüssel zu benötigen, kann die erfindungsgemässe Verdrehbegrenzung bei der Montage/Demontage eines Aufbaus auch als Gegenhaltevorrichtung verwendet werden. Als Verdrehbegrenzungen kommen verschiedene geometrische Formen in Frage, die geeignet sind, Drehmomente formschlüssig auf eine entsprechende, gehäusefeste Kontur oder Aussparung zu übertragen. Am einfachsten ist dies realisierbar mit einem Stift, der orthogonal zur Lastrichtung am Lastaufnehmer starr angeordnet ist und in eine gehäusefeste Aussparung eingreift. Die gehäusefeste Aussparung muss gegenüber der Verdrehbegrenzung genügend Spiel aufweisen dass, wenn sich der Lastaufnehmer in Arbeitsstellung befindet, sich die Verdrehbegrenzung und die gehäusefeste Aussparung nicht berühren und der Lastaufnehmer ausgehend von der Arbeitsstellung nach allen Seiten kippen kann. Idealerweise ist das erste Ende des elastischen Elementes mit dem Fixierglied und das zweite Ende mit dem Lastaufnehmer starr verbunden. Dadurch erzeugt das elastische Element bei der Aufbringung eines Drehmomentes auf den Lastaufnehmer ein Gegendrehmoment, dessen Grösse durch das vorhandene Spiel zwischen der gehäusefesten Aussparung und der Verdrehbegrenzung begrenzt ist. Nach dem Wegfallen des Drehmomentes am Lastaufnehmer dreht das Gegendrehmoment die Verdrehbegrenzung zurück in die Ausgangsstellung. Dadurch wird eine weitgehend berührungsfreie Lage der Verdrehbegrenzung gegenüber der gehäusefesten Aussparung erreicht wenn sich der Lastaufnehmer in Arbeitsstellung befindet.

In einer Weiterbildung der Erfindung weist das Wägemodul ein mit dem feststehenden Bereich der Wägezelle starr verbundenes Bauteil, insbesondere ein Bodenteil auf, das mit einer Positionierungsvorrichtung starr verbunden ist. Dabei kann die Positionierungsvorrichtung auf verschiedene Weise ausgestaltet sein, so zum Beispiel in Form eines zylindrischen oder bombierten Passstiftes, eines konischen Stiftes oder einer Kugel. Diese formschlüssig in mindestens zwei Dimensionen wirkende Positionierungsvorrichtung kann mit oder ohne Einrastelement ausgeführt sein. Führungspartien mit beliebigen Querschnitten wie Schwalbenschwanzführungen und dergleichen können ebenfalls zur Positionierung des Wägemoduls verwendet werden.

In einer bevorzugten Weiterbildung der Erfindung ist die Positionierungsvorrichtung derart angeordnet, dass die in Richtung der Krafteinleitung in die Wägezelle verlaufenden Mittellängsachsen von Positionierungsvorrichtung und Lastaufnehmer zusammenfallen.

In einer besonders bevorzugten Ausführung weisen die Positionierungsvorrichtung und möglicherweise weitere zusätzliche Befestigungsbereiche des Wägemoduls Mittel, vorzugsweise vorstehende Auflageflächen, auf, die das Gehäuse der Wägezelle, insbesondere das Bodenteil vom Wägemodulträger distanzieren um damit Unebenheiten und Deformationen des Wägemodulträgers nicht auf das Wägemodul zu übertragen und das Wägergebnis nicht negativ zu beeinflussen.

Einzelheiten des erfindungsgemässen Wägemoduls mit einer Überlastschutzvorrichtung und Positionierungsvorrichtung ergeben sich anhand der Beschreibung der in den Zeichnungen dargestellten Ausführungsbeispiele. Es zeigen:
Fig. 1 ein Wägemodul bei abgenommenem Gehäuseoberteil mit einer erfindungsgemässen Überlastschutzvorrichtung und Positionierungsvorrichtung;
Fig. 2 eine perspektivische Darstellung des vorderen Teils des Wägemoduls bei abgenommenem Gehäuseoberteil mit einer erfindungsgemässen Überlastschutzvorrichtung und einer Positionierungsvorrichtung, ohne Verdrehbegrenzung;
Fig. 3 eine im Schnitt dargestellte Überlastschutzvorrichtung in einer ersten Ausführungsform mit am Lastaufnehmer angebrachtem Positionierelement und am Fixierglied befestigter Hülse sowie einer möglichen Ausführungsform der integrierten Verdrehbegrenzung; ,
Fig. 4 eine im Schnitt dargestellte Überlastschutzvorrichtung in einer zweiten Ausführungsform mit am Fixierglied angebrachtem Positionierelement und am Lastaufnehmer angebrachter Hülse ohne integrierte Verdrehbegrenzung;
Fig. 5 eine im Schnitt dargestellte, auch Zugkräfte entkoppelnde Überlastschutzvorrichtung in einer dritten Ausführungsform ohne integrierte Verdrehbegrenzung;
Fig. 6 eine im Schnitt dargestellte, auch Zugkräfte entkoppelnde Überlastschutzvorrichtung in einer vierten Ausführungsform;
Fig. 7 eine im Schnitt dargestellte, auch Zugkräfte entkoppelnde Überlastschutzvorrichtung in einer fünften Ausführungsform mit kombiniertem elastischen Element / Federelement;
Fig. 8 eine im Schnitt dargestellte auch Zugkräfte entkoppelnde Überlastschutzvorrichtung in einer sechsten Ausführungsform mit kombiniertem elastischen Element / Federelement / Positionierelement;
Fig. 9 die im Schnitt oder in Perspektive dargestellte Hülse, wobei die Bilder a) bis c) verschiedene Varianten darstellen;
Fig. 10 das Positionierelement, wobei die Bilder a) bis c) verschiedene Varianten darstellen;
Fig. 11 das Positionierelement mit elastischen Eigenschaften, wobei die Bilder a) und b) verschiedene Varianten darstellen.

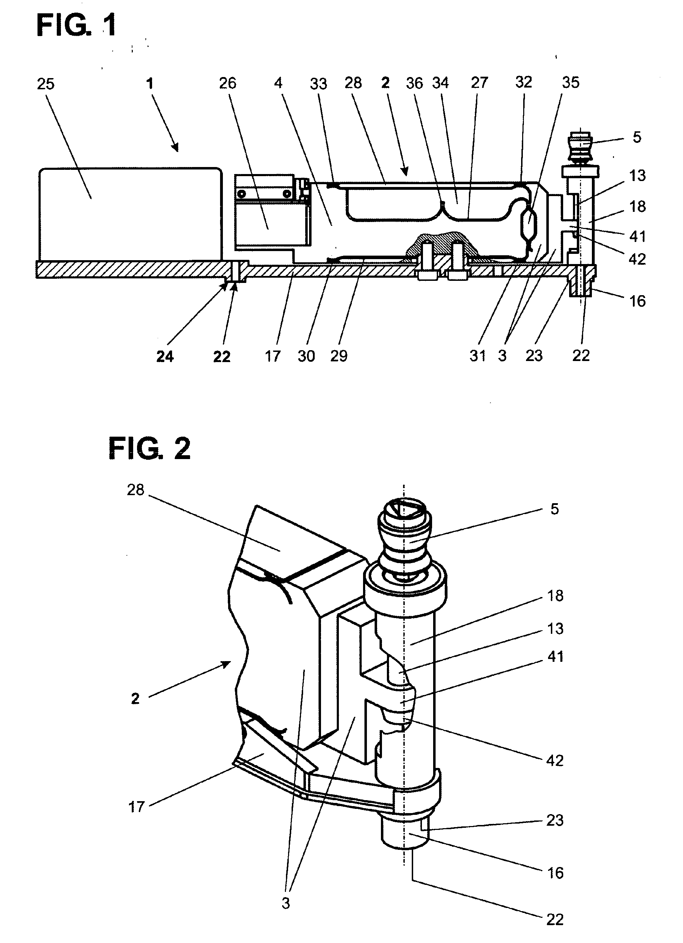

Die Figur 1 zeigt ein Wägemodul 1 bei abgenommenem Gehäuseoberteil. Auf einem Bodenteil 17 sind eine Wägezelle 2, die dazugehörende Kraftkompensationsvorrichtung 26 und das Signalverarbeitungsmodul 25 angebracht. Die Wägezelle 2 weist eine, aus einem einstückigen im Wesentlichen quaderförmigen Materialblock ausgebildete Vorrichtung zur Kraftübertragung auf, deren Materialbereiche durch materialfreie Bereiche in Form von dünnen, den Materialblock senkrecht zu seiner ausgedehnten Seitenfläche durchsetzenden Schnittlinien 27 voneinander getrennt sind. Die Materialbereiche bilden ein Parallelogramm mit einem oberen Parallelogramm-Lenker 28 und einem unteren Parallelogramm-Lenker 29, einem einen feststehenden Bereich 4 bildenden Parallelogramm-Schenkel und einem den Lastaufnahmebereich 3 bildenden, vertikal auslenkbaren Parallelogramm-Schenkel. Parallelogramm-Schenkel 3, 4 und Parallelogramm-Lenker 28, 29 sind über konkav ausgebildete, durch materialfreie Bereiche begrenzte Biegestellen 30, 31, 32, 33 miteinander verbunden. Weitere Materialbereiche im inneren des Materialblocks bilden einen Kraftübertragungshebel 34. Der feststehende Bereich 4 der Wägezelle 2 ist mit dem Bodenteil 17 starr verbunden.

Der Lastaufnahmebereich 3 ist über ein längssteifes, biegeelastisches Koppelelement 35 mit dem kurzen Hebelarm des Kraftübertragungshebels 34 verbunden. Dieser stützt sich über ein Biegelager 36 an einem ins Innere des Materialblocks reichenden Abschnitt des feststehenden Bereichs 4 ab. Die Bauform einer solchen Vorrichtung zur Kraftübertragung hat den Vorteil einer hohen Festigkeit bei kleinem Bauvolumen. Das Parallelogramm 3, 4, 28, 29, das Koppelelement 35, sowie der Kraftübertragungshebel 34 und das Biegelager 36 sind durch materialfreie Bereiche in Form dünner Schnittlinien 27 im Materialblock begrenzt. Diese Schnittlinien 27 werden vorzugsweise mittels Funkenerosion mit einem Erosionsdraht erzeugt. Die Kraftkompensationsvorrichtung 26 ist über eine in dieser Figur nicht dargestellte Hebelverlängerung mit dem Kraftübertragungshebel 34 gekoppelt.

Am Lastaufnahmebereich 3 ist in mittlerer Höhe ein in vom feststehenden Bereich 4 abgewandte Richtung weisender Vorsprung 41 ausgebildet. Ein Kraftübertragungsgestänge 13 ist mit einem Befestigungselement 42, beispielsweise einem Schraubbolzen am Vorsprung 41 festgeschraubt und steht parallel zur ausgedehnten Seitenfläche des Materialblocks und orthogonal zur Längsrichtung der Parallelogramm- Lenker 28, 29. An dem vom Vorsprung 41 abgewandten Ende des Kraftübertragungsgestänges 13 ist der Lastaufnehmer 5 befestigt. Das Kraftübertragungsgestänge 13 wird teilweise von einem Gehäuseteil 18 umschlossen.

Das Bodenteil 17 weist auf der der Wägezelle 2 abgewandten Seite Befestigungsbereiche 22 auf, welche vom Bodenteil 17 erhabene Auflageflächen 23, 24 aufweisen, wobei die Auflagefläche zur Positionierungsvorrichtung 23 vorzugsweise die Positionierungsvorrichtung 16 umschliesst. Besonders vorteilhaft erweist sich die Anordnung dann, wenn die Mittellängsachse der Positionierungsvorrichtung 16 mit der Mittellängsachse des in Betriebsstellung stehenden Lastaufnehmers 5 zusammenfällt. Die Position des Lastaufnehmers 5 wird damit durch die Position der Positionierungsvorrichtung 16, beziehungsweise durch die der Aufnahme der Positionierungsvorrichtung 16 dienende Ausnehmung, vorzugsweise einer Bohrung, im hier nicht dargestellten Wägemodulträger definiert.

In Fig. 2 ist eine perspektivische Darstellung des Lastaufnehmer- Bereichs eines erfindungsgemässen Wägemoduls 1 in der Sicht von schräg oben zu sehen. Der Lastaufnehmer 5 ist mit dem Kraftübertragungsgestänge 13 verbunden. Das Kraftübertragungsgestänge 13 ist durch ein Befestigungselement 42 mit dem Vorsprung 41 starr gekoppelt. Das Kraftübertragungsgestänge 13 wird teilweise vom Gehäuseteil 18 umschlossen. Dieses Gehäuseteil 18 dient zugleich der Begrenzung sowohl der linearen Einfederbewegung des Lastaufnehmers 5 unter Überlast als auch der Begrenzung der Kippbewegung des Lastaufnehmers 5 infolge von auf den Lastaufnehmer 5 einwirkenden Querkräften. Das Bodenteil 17 weist auf der dem Lastaufnehmer 5 abgewandten Seite einen Befestigungsbereich 22 auf, welcher eine über das Bodenteil 17 erhabene Auflagefläche aufweist, wobei die Auflagefläche zur Positionierungsvorrichtung 23 vorzugsweise die Positionierungsvorrichtung 16 umschliesst. Besonders vorteilhaft erweist sich diese Anordnung dann, wenn die Mittellängsachse der Positionierungsvorrichtung 16 mit der Mittellängsachse des Lastaufnehmers 5 zusammenfällt, wie dies durch die strichpunktierte Achsenlinie in der Figur 2 angedeutet ist. Die Position des Lastaufnehmers 5 wird damit durch die Position der Positionierungsvorrichtung 16, beziehungsweise durch die der Aufnahme der Positionierungsvorrichtung 16 dienende Ausnehmung, vorzugsweise einer Bohrung, im nicht dargestellten Wägemodulträger, definiert. Weist der Wägemodulträger mehrere Ausnehmungen auf, die in räumlichem Bezug zueinander stehen, weisen nach der Montage gleichartiger Wägemodule 1 auch deren Lastaufnehmer 5 denselben räumlichen Bezug zueinander auf. Im Falle einer rotationssymmetrischen Positionierungsvorrichtung 16 wie zum Beispiel einem Zylinderstift, einer Kugelraste, einem konischer Stift usw. kann in Bezug auf die Fixierung des Wägemoduls 1 eine frei wählbare Position konzentrisch um die Waagschalenachse gewählt werden. Das am Wägemodul 1 stirnseitig angeordnete Kraftübertragungsgestänge 13, die knappe Umschliessung desselben durch das Gehäuseteil 18 sowie dem auf dieser Stirnseite des Wägemoduls 1 von der Wägemodul-Breite zum Gehäuseteil 18 hin sich verjüngende Bodenteil 17 und das in gleicher Weise sich verjüngende, in dieser Figur abgenommene und nicht dargestellte Gehäuseoberteil, erlaubt eine zweidimensional sehr enge Anordnung mehrerer Lastaufnehmer 5. Die Wägemodule 1 können in diesem Falle zum Mittelpunkt des so gebildeten Wägearrays hin strahlenförmig angeordnet werden. Es ist selbstverständlich denkbar, dass die Befestigungsbereiche 22 sinngemäss auf dem nicht dargestellten Gehäuseoberteil angebracht sind, wobei die Positionierungsvorrichtung 16 in dieser Anordnung idealerweise wie das Gehäuseteil 18 das Kraftübertragungsgestänge 13 umfasst, oder sogar integraler Bestandteil des Gehäuseteils 18 ist.

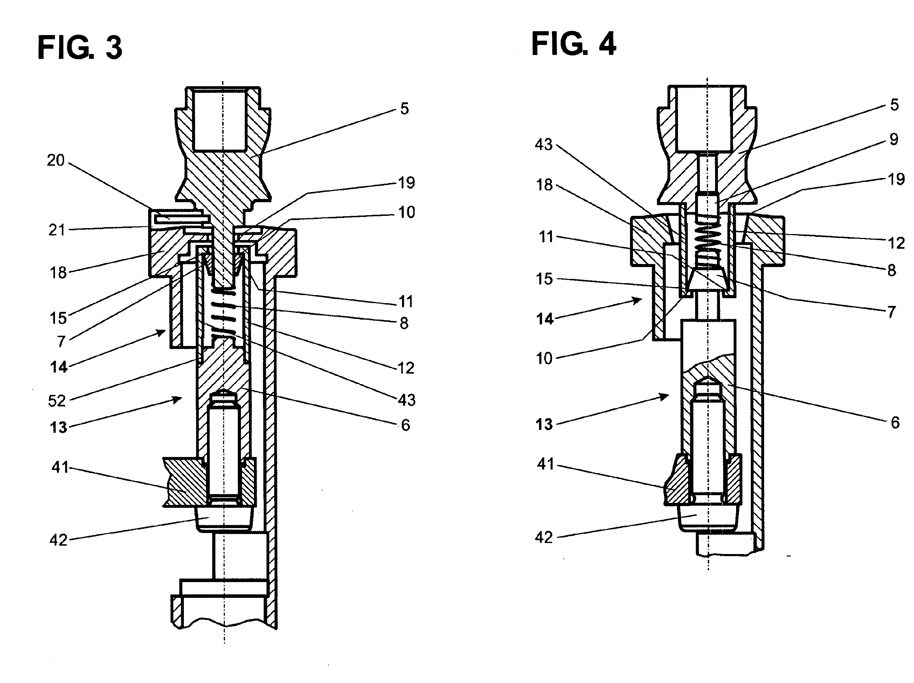

Die Fig. 3 zeigt ein im Schnitt dargestelltes Kraftübertragungsgestänge 13 mit integrierter Überlastschutzvorrichtung. Das Kraftübertragungsgestänge 13 besteht aus dem Fixierglied 6, das mit dem Vorsprung 41 durch das Befestigungselement 42, vorzugsweise einen Schraubbolzen, starr verbunden ist, der Hülse 12, die am Fixierglied 6 fest angebracht ist und dem Lastaufnehmer 5, dessen Positionierelement 7 innerhalb der Hülse 12 durch das elastische Element 8 gegen den Anschlag 11 vorgespannt wird. Das zwischen Fixierglied 6 und Lastaufnehmer 5 angeordnete elastische Element 8, das den Lastaufnehmer 5 gegen das Fixierglied 6 und damit gegen den Lastaufnahmebereich 3 vorspannt, ist vorzugsweise eine Schraubendruckfeder. Der im Innern, am oberen Ende der Hülse 12 ausgebildete Anschlag 11 weist eine ringförmige, orthogonal zur Lastrichtung liegende Fläche oder Linie auf, wobei das mit dem Lastaufnehmer 5 starr verbundene Positionierelement 7 einen gegen den Anschlag 11 gerichteten Gegenanschlag 10 aufweist, an welchem mindestens drei Auflagestellen ausgebildet sind, und wobei die grösste radiale Ausdehnung im Bereich von mindestens drei Berührungsstellen 15 mit der Hülseninnenwand 43 im Wesentlichen gleich gross ist wie der Innendurchmesser der Hülse 12. Wenn das Positionierelement 7 selbst rotationssymmetrisch ausgeformt ist, kann das als Hülse 12 bezeichnete Element selbstverständlich sinngemäss wie beim Positionierelement 7 beschrieben auf drei Auflagestellen reduziert werden. Damit der Lastaufnehmer 5 überhaupt infolge von am Lastaufnehmer 5 angreifenden Querkräften kippen kann, muss eine Freistellung zwischen der Hülse 12 und dem Positionierelement 7 auf der dem Anschlag 11 abgewandten Seite ausgebildet sein. In der vorliegenden Darstellung wird diese Freistellung durch eine' kegelstumpfförmige Ausformung des Positionierelements 7 gegenüber einer zylindrisch geformten Hülseninnenwand 43 erreicht. Durch eine geeignete Ausgestaltung der Hülse 12, beispielsweise mit einem Einstell-Gewinde 52 zwischen Fixierglied 6 und Hülse 12, kann die Federkraft des elastischen Elementes 8 und damit die zulässige Maximallast des Wägemoduls 1 eingestellt werden. Dieselbe Einstellmöglichkeit besteht selbstverständlich bei geeigneter Ausgestaltung auch auf Seite des Lastaufnehmers 5, wobei das Positionierelement 7 gegenüber dem Lastaufnehmer 5 in axialer Richtung einstellbar verschoben werden muss und wobei die Feder 8 abhängig von der Eintauchtiefe des Lastaufnehmers 5 entsprechend vorgespannt wird.

Eine Verdrehbegrenzung 20 ist mit dem Lastaufnehmer 5 starr verbunden und greift in eine gehäusefeste Aussparung 21 ein. Die Verdrehbegrenzung 20 ist vorzugsweise als Stift, die gehäusefeste Aussparung vorzugsweise als Nut ausgebildet, es sind aber auch andere, beispielsweise polygonförmige, den Lastaufnehmer 5 umschliessende Ausformungen der Verdrehbegrenzung 20 und der gehäusefesten Aussparung 21 realisierbar. Die gehäusefeste Aussparung 21 weist gegenüber der Verdrehbegrenzung 20 ausreichend Spiel auf um ein Kippen des Lastaufnehmers 5 ausgehend von der Arbeitsstellung zu ermöglichen und sich, wenn sich der Lastaufnehmer 5 in Arbeitsstellung befindet, die Verdrehbegrenzung 20 und die gehäusefeste Aussparung 21 möglichst nicht berühren. Das erste Ende des elastischen Elementes 8 ist mit dem Fixierglied 6 und das zweite Ende mit dem Lastaufnehmer 5 starr verbunden. Das mit dem Bodenteil 17 fest verbundene Gehäuseteil 18 umschliesst teilweise das Kraftübertragungsgestänge 13 und ist gegen den Lastaufnehmer 5 hin so gestaltet, dass ein Gehäuseanschlag 19 gebildet wird, der die Kippbewegung und Einfederung der Überlastschutzvorrichtung, beziehungsweise des Lastaufnehmers 5 begrenzt.

Die Fig. 4 zeigt eine weitere Ausführungsform eines im Schnitt dargestellten Kraftübertragungsgestänges 13 mit integrierter Überlastschutzvorrichtung. Das Kraftübertragungsgestänge 13 besteht aus dem Fixierglied 6, das mit dem Vorsprung 41 durch das Befestigungselement 42, vorzugsweise einem Schraubbolzen, starr verbunden ist. Am Fixierglied 6 ist das Positionierelement 7 entweder starr angebracht oder direkt angeformt. Der Lastaufnehmer 5 ist mit der Hülse 12, die das Positionierelement 7 umschliesst starr verbunden, wird durch das elastische Element 8 gegen das Fixierglied 6 vorgespannt und bringt damit den Anschlag 11 mit dem Gegenanschlag 10 in Anlage. Das zwischen Fixierglied 6 und Lastaufnehmer 5 innerhalb der Hülse 12 angeordnete elastische Element 8, welches den Lastaufnehmer 5 mit der Hülse 12 gegen das Fixierglied 6 und damit gegen den Lastaufnahmebereich 3 vorspannt, ist vorzugsweise eine Schraubendruckfeder. Der im Innern der Hülse 12 ausgebildete Anschlag 11 weist eine ringförmige, orthogonal zur Lastrichtung liegende Fläche oder Linie auf, wobei das mit dem Fixierglied 6 starr verbundene Positionierelement 7 einen gegen den Anschlag 11 gerichteten Gegenanschlag 10 aufweist an welchem mindestens drei Auflagestellen ausgebildet sind und wobei der grösste Positionierelementdurchmesser im Bereich von mindestens drei Berührungsstellen 15 mit der Hülseninnenwand 43 im Wesentlichen gleich gross ist wie der Innendurchmesser der Hülse 12. Die in Figur 4 offenbarte Ausführungsform ist ohne integrierte Verdrehbegrenzung dargestellt. Selbstverständlich kann auch bei dieser Variante eine Verdrehbegrenzung analog Figur 3 verwendet werden. Das mit dem nicht dargestellten Bodenteil fest verbundene Gehäuseteil 18 umschliesst teilweise das Kraftübertragungsgestänge 13 und ist gegen den Lastaufnehmer 5 hin so gestaltet, dass ein Gehäuseanschlag 19 gebildet wird, der die Kippbewegung und Einfederung der Überlastschutzvorrichtung, beziehungsweise des Lastaufnehmers 5 begrenzt. Auch bei dieser Ausführungsform kann die Federkraft des elastischen Elementes 8 entweder durch die entsprechend konstruierte Hülse 12 oder durch den Lastaufnehmer 5 eingestellt werden. Wird der Lastaufnehmer 5 zweiteilig ausgeführt und verfügt er dadurch über einen Lastaufnehmerbolzen 9, so kann über eine, am Lastaufnehmerbolzen 9 stirnseitig angebrachte, von oben durch eine Bohrung durch den Lastaufnehmer 5 zugängliche Nut, die Einstellung der Federkraft auch nach der Montage des Wägemoduls mittels eines Schraubenziehers noch vorgenommen werden.

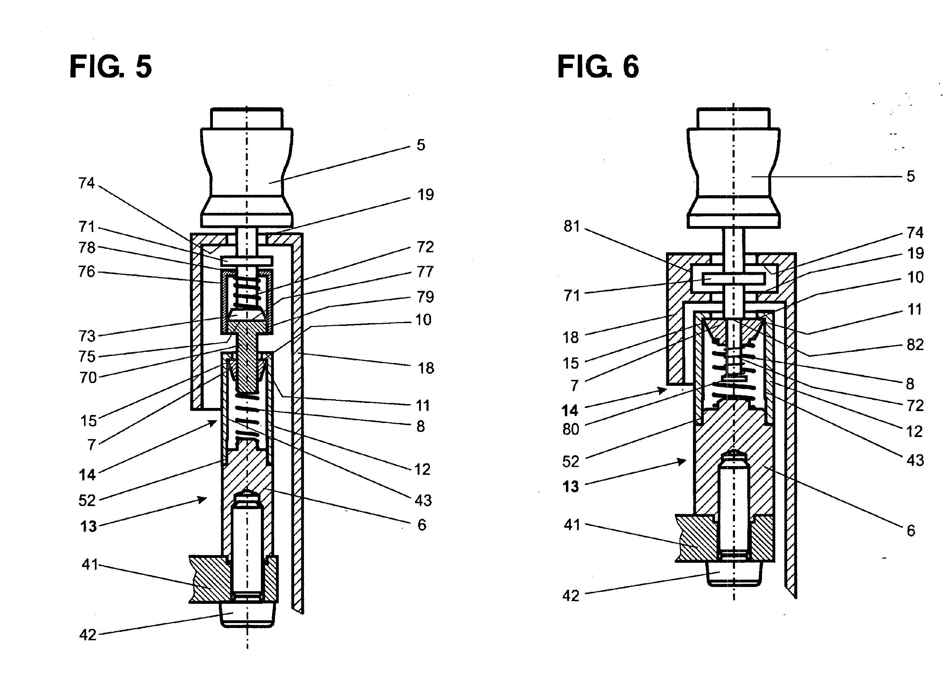

Fig. 5 zeigt eine weitere Ausführungsform eines im Schnitt dargestellten Kraftübertragungsgestänges 13 mit integrierter Überlastschutzvorrichtung 14. Das Kraftübertragungsgestänge 13 besteht aus dem Fixierglied 6, das mit dem Vorsprung 41 durch das Befestigungselement 42, vorzugsweise einen Schraubbolzen, starr verbunden ist, der Hülse 12, die am Fixierglied 6 fest angebracht ist, dem Zwischenglied 70, dessen Positionierelement 7 innerhalb der Hülse 12 durch das elastische Element 8 gegen den Anschlag 11 vorgespannt wird und dem Lastaufnehmer 5, dessen Führungskörper 73 innerhalb der mit dem Zwischenglied 70 starr verbundenen Zwischengliedhülse 76 durch das Federelement 72 gegen den Zwischengliedanschlag 75 vorgespannt wird.

Das zwischen Fixierglied 6 und Zwischenglied 70 angeordnete elastische Element 8, das das Zwischenglied 70 gegen das Fixierglied 6 und damit gegen den Lastaufnahmebereich 3 vorspannt, ist vorzugsweise eine Schraubendruckfeder. Der im Innern, am oberen Ende der Hülse 12 ausgebildete Anschlag 11 weist eine ringförmige, orthogonal zur Lastrichtung liegende Fläche oder Linie auf, wobei das mit dem Zwischenglied 70 starr verbundene Positionierelement 7 einen gegen den Anschlag 11 gerichteten Gegenanschlag 10 aufweist, an welchem mindestens drei Auflagestellen ausgebildet sind, und wobei die grösste radiale Ausdehnung im Bereich von mindestens drei Berührungsstellen 15 mit der Hülseninnenwand 43 im Wesentlichen gleich gross ist wie der Innendurchmesser der Hülse 12. Wenn das Positionierelement 7 selbst rotationssymmetrisch ausgeformt ist, kann das als Hülse 12 bezeichnete Element selbstverständlich sinngemäss wie beim Positionierelement 7 beschrieben auf drei Auflagestellen reduziert werden. Damit das Zwischenglied 70 beziehungsweise der Lastaufnehmer 5 überhaupt infolge von am Lastaufnehmer 5 angreifenden Querkräften kippen kann, muss eine Freistellung zwischen der Hülse 12 und dem Positionierelement 7 auf der dem Anschlag 11 abgewandten Seite ausgebildet sein. In der vorliegenden Darstellung wird diese Freistellung durch eine kegelstumpfförmige Ausformung des Positionierelements 7 gegenüber einer zylindrisch geformten Hülseninnenwand 43 erreicht. Durch eine geeignete Ausgestaltung der Hülse 12, beispielsweise mit einem Einstell-Gewinde 52 zwischen Fixierglied 6 und Hülse 12, kann die Federkraft des elastischen Elementes 8 und damit die zulässige Maximallast des Wägemoduls 1 eingestellt werden.

Das zwischen der Zwischengliedhülse 76 und dem Lastaufnehmer 5 angeordnete Federelement 72, das den Lastaufnehmer 5 gegen das Zwischenglied vorspannt, ist vorzugsweise eine Schraubendruckfeder. Der am oberen Ende des Zwischengliedes 70 ausgebildete und durch die Zwischengliedhülse 76 radial begrenzte Zwischengliedanschlag 75 weist eine ringförmige, orthogonal zur Lastrichtung liegende Fläche oder Linie auf. Der mit dem Lastaufnehmer 5 starr verbundene Führungskörper 73 weist einen gegen den Zwischengliedanschlag 75 gerichteten Führungskörperanschlag 77 auf, an welchem mindestens drei Auflagestellen ausgebildet sind. Der Führungskörper 73 wird innerhalb der Zwischengliedhülse 76 geführt wobei der mit dem Lastaufnehmer 5 starr verbundene Führungskörper 73 sich nur linear gegenüber der Zwischengliedhülse 76 verschieben kann. Dabei ist es unerheblich, ob der Führungskörper 73 alleine die Funktion der Linearführung übernimmt oder ob, wie in Fig. 5 dargestellt, eine an der Zwischengliedhülse 75 ausgebildete Hülsenführung 78 einen Teil der Linearführungsfunktion übernimmt. Selbstverständlich sind am Führungskörper 73 analog zum Positionierelement 7 gegenüber der Zwischengliedhülse 76 lediglich drei Führungspartien notwendig. Durch eine geeignete Ausgestaltung der Zwischengliedhülse 76, beispielsweise mit einem Justiergewinde 79 zwischen dem Zwischenglied 70 und der Zwischengliedhülse 76, kann die Federkraft des Federelementes 72 eingestellt werden.

Die in Figur 5 offenbarte Ausführungsform ist ohne integrierte Verdrehbegrenzung dargestellt. Selbstverständlich kann auch bei dieser Variante eine Verdrehbegrenzung analog der in der Beschreibung von Figur 3 aufgeführten Lösungen verwendet werden. Das mit dem nicht dargestellten Bodenteil fest verbundene Gehäuseteil 18 umschliesst teilweise das Kraftübertragungsgestänge 13 und ist gegen den Lastaufnehmer 5 hin so gestaltet, dass ein Gehäuseanschlag 19 gebildet wird, der die Kippbewegung und Einfederung der Überlastschutzvorrichtung, beziehungsweise des Lastaufnehmers 5 begrenzt. An der Innenseite des Gehäuseteils 18 ist gegen einen Bolzenbund 71 hin der Ausreissanschlag 74 ausgebildet. Der mit dem Lastaufnehmer 5 starr verbundene Bolzenbund 71 begrenzt, in Interaktion mit dem Ausreissanschlag 74, die lineare Bewegung des Lastaufnehmers 5 gegenüber der Zwischengliedhülse 76 bei am Lastaufnehmer 5 angreifenden Kräften, die entgegen der Lastrichtung wirken.

Fig. 6 zeigt eine weitere Ausführungsform eines im Schnitt dargestellten Kraftübertragungsgestänges 13 mit integrierter Überlastschutzvorrichtung 14. Der Aufbau der Überlastschutzvorrichtung 14 entspricht weitgehend dem Aufbau der in Fig. 3 und Fig. 5 beschriebenen Ausführungen. Die Merkmale Lastaufnehmer 5, Fixierglied 6, elastisches Element 8, Gegenanschlag 10, Anschlag 11, Hülse 12, Berührungsstelle 15, Vorsprung 41, Befestigungselement 42, Hülsenwand 43, Einstellgewinde 52 entsprechen somit in Ausgestaltung und Funktion denen in Fig. 3 und Fig. 5.

Anders als in Fig. 3 und Fig. 5 ist der Lastaufnehmer 5 nicht starr mit dem Positionierelement 7 verbunden sondern gegenüber dem Positionierelement 7 linear verschiebbar geführt. Gegen den Anschlag 11 ist am Lastaufnehmer 5 ein Bolzenanschlag 82 ausgebildet, der in Betriebsstellung mit dem Anschlag 11 des Positionierelementes 7 durch das Federelement 72 vorgespannt in Anlage gehalten wird. Das Federelement 72 ist auf der dem Fixierglied 6 zugewandten Seite des Positionierelements 7 zwischen dem Positionierelement 7 und der mit dem Lastaufnehmer 5 starr verbundenen Federsicherung 80 angeordnet. Das vorzugsweise als Schraubendruckfeder ausgebildete Federelement 72 kann bei geeigneter Dimensionierung wie dargestellt innerhalb des elastischen Elementes 8 angeordnet sein.

Der mit dem Lastaufnehmer 5 starr verbundene Bolzenbund 71 wird in seiner Bewegungsfreiheit in allen Richtungen durch die auf der Innenseite des Gehäuseteils 18 ausgebildeten Gehäusenut 81 begrenzt. Am Lastaufnehmer 5 angreifende Kippmomente beziehungsweise in Lastrichtung wirkende Überlasten oder gegen die Lastrichtung wirkende Kräfte, die die Federkräfte des elastischen Elementes 8 oder des Federelementes 72 überschreiten, werden über den Bolzenbund 71 und eventuell die Kippmomente auch über den Schaft des Lastaufnehmers 5 an das Gehäuseteil 18 abgeleitet und nicht auf die Wägezelle übertragen. Die als Gehäusenut 81 bezeichnete Begrenzungsvorrichtung ist nicht auf eine Ringnut beschränkt sondern bezieht sich auf jegliche Ausformung beliebigen Querschnitts, die geeignet ist, mit dem Bolzenbund 71 in der beschriebenen Art zu interagieren. Ebenso ist die Gestaltung des Bolzenbundes 71 nicht auf eine Ringform beschränkt sondern umfasst alle am Lastaufnehmer 5 ausgebildeten Vorsprünge, die geeignet sind, mit der Gehäusenut 81 zu interagieren. Selbstverständlich kann die als Gehäusenut 81 bezeichnete Ausformung auch am Lastaufnehmer 5, und der als Bolzenbund 71 bezeichnete Vorsprung am Gehäuseteil 18 ausgebildet sein. Zusätzlich kann der Bolzenbund 71 und die Gehäusenut 81 so ausgestaltet sein, dass Drehmomente infolge von tangential am Lastaufnehmer 5 angreifenden Kräften über das Gehäuseteil 18 abgestützt werden können und so eine Verdrehsicherung bilden.

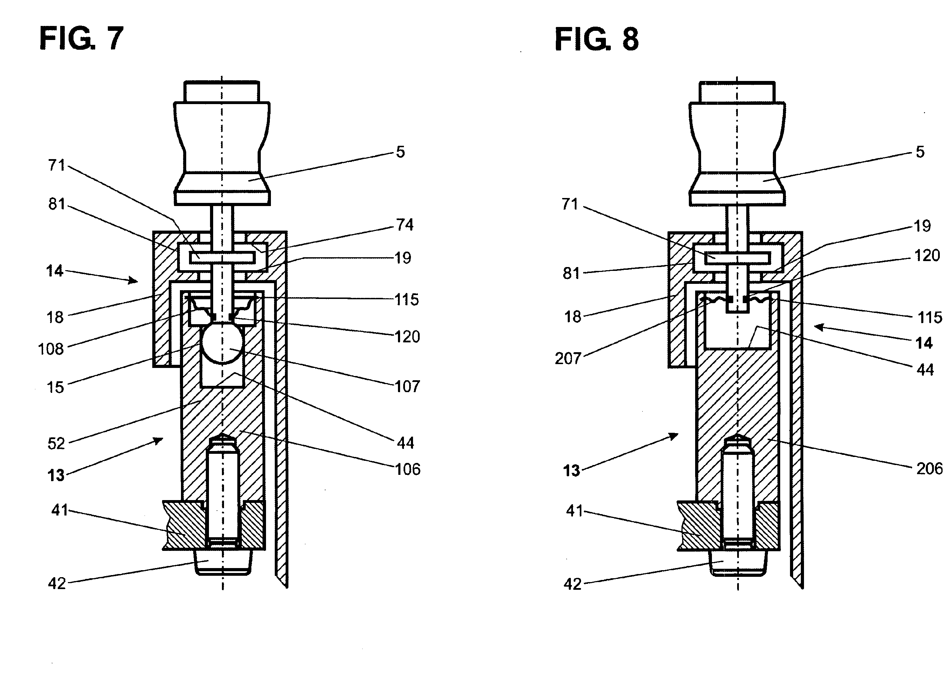

Fig. 7 zeigt einen ähnlichen Aufbau wie Fig. 6 wobei die Merkmale Lastaufnehmer 5, Berührungsstelle 15, Gehäuseteil 18, Vorsprung 41, Befestigungselement 42, Bolzenbund 71, Gehäusenut 81 in Ausgestaltung und Funktion denen in Fig. 6 entsprechen. Wie in den vorangehend beschriebenen Figuren 3 bis 6 wird der Lastaufnehmer 5 durch das in dieser Figur sphärisch geformte Positionierelement 107 in zwei Dimensionen spielfrei positioniert. Im Unterschied zum Positionierelement 7 der Fig. 6 existiert in der dritten Dimension, die der Lastrichtung entspricht, kein Anschlag. Die Positionierung in Lastrichtung und entgegen der Lastrichtung wird vom elastischen Element 108, das wie die elastische Eigenschaften aufweisenden Positionselemente geformt sein kann, dadurch sichergestellt, dass dessen erster Verbindungsbereich 115, beispielsweise die äussere Randpartie einer Membrane starr mit dem Fixierglied 106, und dessen zweiter Verbindungsbereich 120, beispielsweise der Rand der Membranenbohrung starr mit dem Lastaufnehmer 5 verbunden sind. Bei Auflage einer Last auf den Lastaufnehmer 5 taucht der Lastaufnehmer 5 daher abhängig von der Grösse der Last und der Elastizität des elastischen Elementes 108 in Lastrichtung in die Bohrung des Fixiergliedes 106 ein, ohne den Bohrungsgrund 44 zu berühren. Das elastische Element 108 muss nicht zwingend eine Membrane sein, es sind andere Elemente, beispielsweise eine konisch gewickelte Spiralfeder oder Schraubendruckfeder oder auch am Umfang des Lastaufnehmers 5 verteilte Blechstreifen denkbar welche die beschriebene Funktion erfüllen. Das Fixierglied 106 muss nicht zwingend einstückig aufgebaut sein, es kann genauso aus dem Fixierglied und einer Hülse bestehen. Die Wegbegrenzung, Kippbegrenzung und ggf. die Verdrehbegrenzung des Lastaufnehmers 5 wird durch die in Fig. 6 eingehend beschriebenen Elemente Bolzenbund 71 und Gehäusenut 81 sichergestellt.

Fig. 8 zeigt wiederum einen ähnlichen Aufbau wie Fig. 7 wobei die Merkmale Lastaufnehmer 5, Gehäuseteil 18, Vorsprung 41, Befestigungselement 42, Bolzenbund 71, Gehäusenut 81 somit in Ausgestaltung und Funktion denen in Fig. 7 entsprechen. Im Unterschied zur Fig. 6 wird die Positionierung des Lastaufnehmers 5 gegenüber dem Fixierglied 206 in allen drei Dimensionen vom elastisch ausgebildeten Positionierelement 207 dadurch sichergestellt, dass dessen erster Verbindungsbereich 115, beispielsweise die äussere Randpartie einer Membrane starr mit dem Fixierglied 206, und dessen zweiter Verbindungsbereich 120, beispielsweise der Rand der Membranenbohrung starr mit dem Lastaufnehmer 5 verbunden sind. Bei Auflage einer Last auf den Lastaufnehmer 5 taucht der Lastaufnehmer 5 wie bei Fig. 7 beschrieben abhängig von der Grösse der Last und der Elastizität des Positionierelementes 207 in Lastrichtung in die Bohrung des Fixiergliedes 206 ein, ohne den Bohrungsgrund 44 zu berühren. Das Positionierelement 207 muss nicht zwingend eine Membrane sein, es sind andere Elemente, beispielsweise eine konisch gewickelte Spiralfeder oder Schraubendruckfeder, eine zylindrische Schraubendruckfeder oder auch am Umfang des Lastaufnehmers 5 verteilte Blechstreifen denkbar, welche die beschriebene Funktion erfüllen. Die Wegbegrenzung, Kippbegrenzung und ggf. die Verdrehbegrenzung des Lastaufnehmers 5 wird durch die in Fig. 6 eingehend beschriebenen Elemente' Bolzenbund 71 und Gehäusenut 81 sichergestellt.

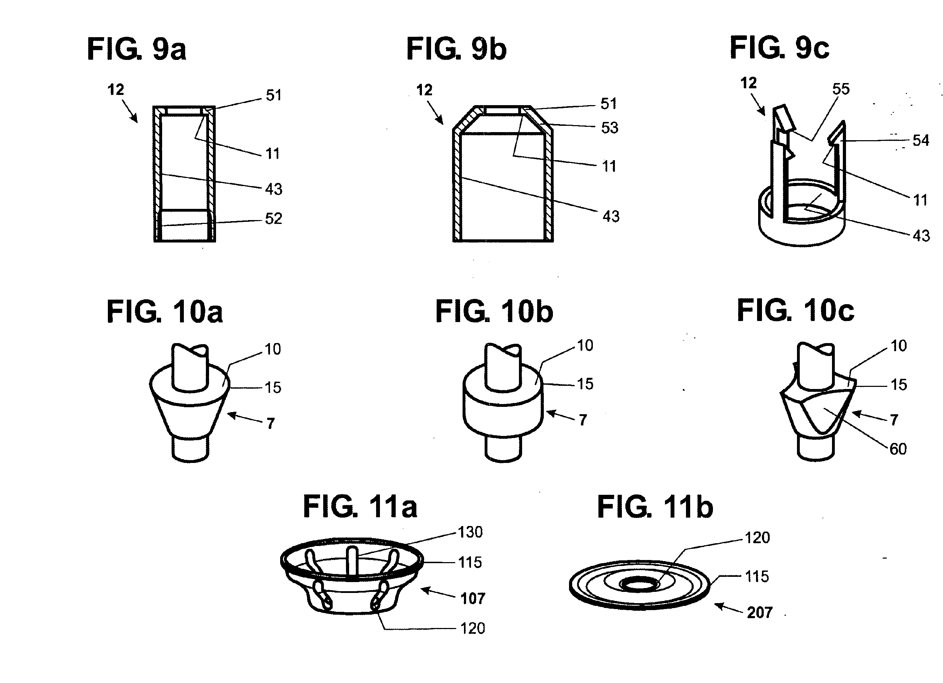

Fig. 9 zeigt, nicht abschliessend, verschiedene mögliche Ausführungen von Hülsen 12. Jede dieser Hülsen 12 hat mit den anderen Hülsen 12 gemeinsam, dass sie in radialer wie auch in axialer Richtung über je mindestens 3 präzise Berührungsstellen mit dem nicht dargestellten Positionierelement verfügen. Dadurch positionieren die Hülsen 12 den Lastaufnehmer gegenüber dem Fixierglied sehr präzise und bei geeigneter Ausgestaltung nimmt nach jedem Kippen des Lastaufnehmers der Lastaufnehmer wieder die ursprüngliche Position ein. In Figur 9a ist eine zylindrische Hülse 12 im Schnitt dargestellt. Am oberen Ende der rotationssymmetrischen Hülse 12 ist ein gegen innen gerichteter Bund 51 angeformt der den Anschlag 11 bildet. Im unteren Bereich der Hülse 12 ist ein Gewinde 52 ausgebildet, welches der Einstellbarkeit des elastischen Elementes dient und die Hülse 12 mit dem nicht dargestellten Fixierglied starr verbindet. Das Gewinde 52 ist nicht zwingender Bestandteil der Hülse 12, die starre Verbindung zwischen Fixierglied und Hülse 12 kann auch über einen Presssitz, eine Stiftverbindung oder gleichgeartete Verbindungsformen inklusive nicht lösbarer Verbindungen erwirkt werden. Zudem kann je nach Gestaltung des Fixiergliedes das Gewinde 52 auch auf der Aussenseite der Hülse 12 angebracht sein. In Fig. 9b ist eine Hülse 12 im Schnitt dargestellt, deren obere Partie 53 nach oben hin verjüngt ist und in einem nach innen gerichteten Bund 51 abschliesst. Diese Ausgestaltung der Hülse 12 erlaubt einen grösseren Kippwinkel des Lastaufnehmers. Ebenfalls möglich ist bei dieser Hülsenform die Verwendung eines zylindrischen Positionierelements analog der Figur 10b. Selbstverständlich muss die untere Partie der Hülse 12 nicht zwingend zylindrisch sein sondern kann eine beliebige Querschnittsform in radialer und/oder axialer Richtung aufweisen, solange die gewählte Form die zum Kippen notwendige Freistellung gewährleistet. Fig. 9c stellt eine auf die notwendigen Eigenschaften bezüglich Führung und Positionierung des nicht dargestellten Positionierelements erfüllende, massenreduzierte Hülse 12 dar, die lediglich noch drei, nach oben gerichtete Einrastfinger 54 aufweist. Eine derart ausgebildete Hülse 12 kann am Fixierglied direkt ausgebildet sein, da die Einrastfinger 54 beim Einführen des Positionierelements von oben durch denselben auseinandergedrückt werden und wieder zurückfedern, sobald der grösste Durchmesser des Positionierelements die Einrastkanten 55 passiert hat. Bei dieser Ausführung der Hülse 12 ist die Verwendung rotationssymmetrischer Positionierelemente zweckmässig. Eine derart gestaltete Hülse 12 kann auch eingesetzt werden, wenn ein unkompliziertes und rasches Wechseln des Lastaufnehmers durch auskugeln des vorhandenen, beziehungsweise Einrasten des neuen Lastaufnehmers vorgenommen werden soll.

In Fig. 10 sind verschiedene mögliche Ausgestaltungen des Positionierelements 7 dargestellt wobei alle Figuren 10a bis 10c die mit der Hülse in Interaktion stehenden Berührungsstellen 15 und den Gegenanschlag 10 aufweisen. Fig. 10a zeigt ein rotationssymmetrisches Positionierelement 7, dessen vom Gegenanschlag 10 abgewandte Seite kegelstumpfförmig ausgebildet ist. Dieses Positionierelement 7 ist in allen, in Fig. 9 dargestellten Hülsen verwendbar. Fig.10b zeigt ein zylindrisches Positionierelement 7. Ein derart gestaltetes Positionierelement 7 ist nur in Hülsen verwendbar, die analog der in Fig. 9b gezeigten Hülse ausgeformt sind und den notwendigen Freiraum zum Kippen des Positionierelements 7 zur Verfügung stellen. In Fig. 10c besitzt das nach Figur 10a gestaltete Positionierelement 7 zusätzlich Ausnehmungen 60, die den Gegenanschlag 10 unterteilen und die Berührungsstellen 15 mit der Hülseninnenwand auf drei reduzieren. Selbstverständlich kann die Anzahl der Ausnehmungen 60 und damit die Zahl der Berührungsstellen 15 mit der Hülseninnenwand und Unterteilungen des Gegenanschlags 10 frei gewählt werden. Ein derart ausgebildetes Positionierelement 7 eignet sich gattungsgemäss nicht zum Einsatz in einer Hülse nach Fig. 9c.

In Fig. 11 sind verschiedene mögliche Ausgestaltungen des elastische Eigenschaften aufweisenden Positionierelements 107, 207 dargestellt, wobei sowohl Fig. 11a als auch Fig. 11b den ersten Verbindungsbereich 115 und den zweiten Verbindungsbereich 120 aufweisen.
Fig. 10a zeigt ein rotationssymmetrisches Positionierelement 107, dessen erster Verbindungsbereich 115 starr mit dem nicht dargestellten Fixierglied 106, 206, und dessen zweiter Verbindungsbereich 120 starr mit dem nicht dargestellten Lastaufnehmer 5 verbunden sind. Das Positionierelement 107 kann zudem mit einem oder mehreren Schlitzen 130 durchsetzt sein wobei die Schlitze 130 radial oder auch spiralförmig vom Zentrum nach aussen verlaufen können. Das als becherförmige Membrane gestaltete Positionierelement 107 kann aber auch in Form einer ringförmigen, ebenen Membran gehalten sein. Eine besondere Ausgestaltung eines solchen Positionierelementes 107 stellt eine ein- oder mehrgängige Schraubenfeder dar, die auf Zug, Biegung und Druck belastet werden kann. Dabei liegen der erste Verbindungsbereich 115 und der zweite Verbindungsbereich 120 genau übereinander. Eine dreigängige Schraubendruckfeder, deren Windungsversatz 120° beträgt, weist eine besonders gute Formstabilität auf. Fig. 10b zeigt ein rotationssymmetrisches Positionierelement 207, dessen erster Verbindungsbereich 115 starr mit dem nicht dargestellten Fixierglied 106, 206, und dessen zweiter Verbindungsbereich 120 starr mit dem nicht dargestellten Lastaufnehmer 5 verbunden sind. Das als ringförmige Membran gestaltete Positionierelement 207 weist koaxial zum Zentrum hin eine wellenförmige Ausgestaltung auf wobei das Positionierelement 207 abhängig vom Elastizitätsmodul des Materials und der gewünschten Steifigkeit auch eine glatte Scheibe sein kann.

Selbstverständlich ist eine erfindungsgemässe Überlastsicherung nicht nur auf eine Wägezelle mit einer Vorrichtung zur Kraftübertragung in Form eines Materialblocks, dessen Materialbereiche durch materialfreie Bereiche in Form dünner den Materialblock senkrecht zu seiner ausgedehnten Seitenfläche durchsetzender Schnittlinien voneinander getrennt sind, montierbar. Es sind auch Ausführungsformen des Lastaufnehmers mit einem Überlastschutz und einer darin integrierten Drehmoment-Sicherung denkbar, die auf eine Wägezelle mit einem Materialblock, dessen materialfreien Bereiche durch Fräsen erzeugt werden, montiert werden können. Ebenso ist es möglich, eine erfindungsgemässe positionspräzise Überlastschutzvorrichtung mit einer Dehnmessstreifen- Wägezelle oder weiteren nach dem Prinzip der elektromagnetischen Kraftkompensation arbeitenden Wägezellen zu verbinden. Der Einsatz dieser Wägezellen ist selbstverständlich auch nicht nur auf Wägemodule beschränkt, sondern kann in allen bekannten Messgeräten, die der Bestimmung der Masse eines Wägegutes dienen, eingesetzt werden.

### Bezugszeichenliste

- 1: Wägemodul
- 2: Wägezelle
- 3: Lastaufnahmebereich, Parallelogramm-Schenkel
- 4: feststehender Bereich, Parallelogramm-Schenkel
- 5: Lastaufnehmer
- 6, 106, 206: Fixierglied
- 7, 107, 207: Positionierelement
- 8, 108: elastisches Element
- 9: Lastaufnehmerbolzen
- 10: Gegenanschlag
- 11: Anschlag
- 12: Hülse
- 13: Kraftübertragungsgestänge
- 14: Überlastschutzvorrichtung
- 15: Berührungsstelle
- 16: Positionierungsvorrichtung
- 17: Bodenteil
- 18: Gehäuseteil
- 19: Gehäuseanschlag
- 20: Verdrehbegrenzung
- 21: gehäusefeste Aussparung
- 22: Befestigungsbereich
- 23: Auflagefläche zur Positionierungsvorrichtung
- 24: Auflagefläche
- 25: Signalverarbeitungsmodul
- 26: Kraftkompensationsvorrichtung
- 27: Schnittlinien
- 28: oberer Parallelogramm-Lenker
- 29: unterer Parallelogramm-Lenker
- 30, 31, 32, 33: Biegestelle
- 34: Kraftübertragungshebel
- 35: Koppelelement
- 36: Biegelager
- 40: Bearbeitungsbohrung
- 41: Vorsprung
- 42: Befestigungselement
- 43: Hülseninnenwand
- 44: Bohrungsgrund
- 51: Bund
- 52: Gewinde, Einstellgewinde
- 53: obere Partie der Hülse
- 54: Einrastfinger
- 55: Einrastkante
- 60: Ausnehmungen
- 70: Zwischenglied
- 71: Bolzenbund
- 72: Federelement
- 73: Führungskörper
- 74: Ausreissanschlag
- 75: Zwischengliedanschlag
- 76: Zwischengliedhülse
- 77: Führungskörperanschlag
- 78: Hülsenführung
- 79: Justiergewinde
- 80: Federsicherung
- 81: Gehäusenut
- 82: Bolzenanschlag
- 115: erster Verbindungsbereich
- 120: zweiter Verbindungsbereich
- 130: Schlitz

## Patentansprüche

1. Wägemodul (1) mit einer einen Lastaufnahmebereich (3) und einen feststehenden Bereich (4) aufweisenden Wägezelle (2), einem Lastaufnehmer (5) und einer zwischen dem Lastaufnehmer (5) und dem Lastaufnahmebereich (3) angeordneten Überlastschutzvorrichtung (14) zum Schutz der Wägezelle (2) vor Überlastung durch statische und dynamische Kräfte, **dadurch gekennzeichnet, dass** der Lastaufnehmer (5) mittels eines Positionierelements (7, 107, 207) bezüglich dem Lastaufnahmebereich (3) wenigstens in der Ebene orthogonal zur Lastrichtung spielfrei positioniert ist, der Lastaufnehmer (5) gegenüber dem Lastaufnahmebereich (3) bei am Lastaufnehmer (5) angreifenden Kräften in Lastrichtung beziehungsweise in und gegen die Lastrichtung verschoben werden kann und der Lastaufnehmer (5) aufgrund einer zwischen dem Positionierelement (7, 107, 207) und dem Lastaufnahmebereich (3) ausgebildeten Freistellung bei am Lastaufnehmer (5) orthogonal zur Lastrichtung angreifenden Kräften in alle Richtungen kippfähig ist.

2. Wägemodul (1) nach Anspruch 1, **dadurch gekennzeichnet, dass** der Lastaufnehmer (5) mittels einer Hülse (12) und des Positionierelements (7) bezüglich dem Lastaufnahmebereich (3) in Lastrichtung spielfrei geführt, unter Wirkung eines elastischen Elementes (8, 108) gegen einen Anschlag (11) vorgespannt positioniert und bei die Vorspannkraft des elastischen Elements (8) übersteigenden Kräften am Lastaufnehmer (5) in Lastrichtung verschiebbar, und orthogonal zur Lastrichtung in alle Richtungen kippbar ist.

3. Wägemodul (1) nach einem der Ansprüche 1 oder 2, **dadurch gekennzeichnet, dass** ein mit dem Lastaufnahmebereich (3) fest verbundenes Fixierglied (6, 106, 206) mit einer Hülse (12) starr verbunden ist und am Lastaufnehmer (5) das Positionierelement (7, 107, 207) starr angebracht ist.

4. Wägemodul (1) nach einem der Ansprüche 1 oder 2, **dadurch gekennzeichnet, dass** ein mit dem Lastaufnahmebereich (3) fest verbundenes Fixierglied (6, 106, 206) mit dem Positionierelement (7, 107, 207) starr verbunden ist und am Lastaufnehmer (5) eine Hülse (12) starr angebracht ist.

5. Wägemodul (1) nach einem der Ansprüche 2 bis 4, **dadurch gekennzeichnet, dass** der Anschlag (11) im Innern der Hülse (12) ausgebildet ist, eine ringförmige, orthogonal zur Lastrichtung liegende Fläche oder Linie bildet und ein, gegen den Anschlag (11) gerichteter Gegenanschlag (10) des Positionierelements (7) mindestens drei Auflagestellen aufweist, wobei die radiale Ausdehnung des Positionierelements (7) im Bereich von mindestens drei Berührungsstellen (15) mit der Hülseninnenwand (43) im Wesentlichen gleich gross ist wie die radiale Ausdehnung der Hülse (12) an diesen Berührungsstellen (15).

6. Wägemodul (1) nach einem der Ansprüche 3 bis 5, **dadurch gekennzeichnet, dass** die Verbindung zwischen der Hülse (12) und dem Teil, mit dem sie fest verbunden ist, zur Einstellung der Federkraft des elastischen Elementes (8) gegenüber dem Teil, mit dem sie fest verbunden ist, axial verschiebbar und fixierbar ausgeführt ist.

7. Wägemodul (1) nach einem der Ansprüche 5 oder 6, **dadurch gekennzeichnet, dass** das Positionierelement (7) kegelstumpfförmig ausgebildet ist, wobei die mindestens drei Auflagestellen des Gegenanschlags (10) an der Basis angeordnet sind.

8. Wägemodul (1) nach einem der Ansprüche 1 bis 7, **dadurch gekennzeichnet, dass** das Positionierelement (107, 207) elastische Eigenschaften aufweist.

9. Wägemodul (1) nach einem der Ansprüche 5 bis 7, **dadurch gekennzeichnet, dass** die Auflagestellen des Gegenanschlags (10) auf einer Kreisfläche oder einem Kreisring liegen.

10. Wägemodul (1) nach einem der Ansprüche 2 bis 9, **dadurch gekennzeichnet, dass** das elastische Element (8, 108) eine Schraubendruckfeder ist.

11. Wägemodul (1) nach einem der Ansprüche 2 bis 10, **dadurch gekennzeichnet, dass** das Positionierelement (7) und, sofern vorhanden das elastische Element (8, 108) und die Hülse (12) so angeordnet sind, dass deren in Richtung der Krafteinleitung in die Wägezelle (2) verlaufenden Mittellängsachsen zumindest dann zusammenfallen, wenn der Lastaufnehmer (5) seine Betriebsstellung eingenommen hat.

12. Wägemodul (1) nach einem der Ansprüche 1 bis 11, **dadurch gekennzeichnet, dass** das Wägemodul (1) ein Bodenteil (17) aufweist und dass an einem mit diesem Bodenteil (17) starr verbundenen Bauteil, insbesondere einem Gehäuseteil (18), mindestens ein Gehäuseanschlag (19) oder eine Gehäusenut (81) ausgebildet ist, die die Kippbewegung des Lastaufnehmers (5) und die Bewegung in Lastrichtung beziehungsweise in und gegen die Lastrichtung durch Interaktion mit der Kontur des Lastaufnehmers (5) oder einen am Lastaufnehmer (5) ausgebildeten Bolzenbund (71) begrenzen.

13. Wägemodul (1) nach einem der Ansprüche 1 bis 12, **dadurch gekennzeichnet, dass** der Lastaufnehmer (5) eine Verdrehbegrenzung (20) gegen zu hohe, orthogonal zur Lastrichtung wirkende, insbesondere tangential am Lastaufnehmer (5) angreifende Kräfte aufweist, wobei die Verdrehbegrenzung (20) in eine gehäusefeste Aussparung (21) eingreift.

14. Wägemodul (1) nach Anspruch 12, **dadurch gekennzeichnet, dass** der Lastaufnehmer (5) einen Bolzenbund (71) gegen zu hohe, orthogonal zur Lastrichtung wirkende, insbesondere tangential am Lastaufnehmer (5) angreifende Kräfte aufweist, wobei der Bolzenbund (71) in eine gehäusefeste Gehäusenut (81) eingreift.

15. Wägemodul (1) nach einem der Ansprüche 1 bis 14, **dadurch gekennzeichnet, dass** mit dem feststehenden Bereich (4) mindesten ein der Befestigung an einen Wägemodulträger dienender Befestigungsbereich (22), verbunden ist, wobei mindestens ein Befestigungsbereich (22) eine Positionierungsvorrichtung (16) aufweist, die derart angeordnet ist, dass die in Richtung der Krafteinleitung in die Wägezelle (2) verlaufenden Mittellängsachse der in ihrer Betriebsstellung stehenden Überlastschutzvorrichtung (14) und/oder des in seiner Betriebsstellung stehenden Lastaufnehmers (5) mit der Mittellängsachse der Positionierungsvorrichtung (16) zusammenfällt.

16. Wägemodul (1) nach Anspruch 15, **dadurch gekennzeichnet, dass** jeder Befestigungsbereich (22) eine vorstehende Auflagefläche (23, 24) aufweist.

17. Wägemodul (1) nach einem der Ansprüche 15 oder 16, **dadurch gekennzeichnet, dass** die Positionierungsvorrichtung (16) aus mindestens einem Passstift besteht.

18. Verwendung eines Wägemoduls (1) nach einem der Ansprüche 1 bis 17 **dadurch gekennzeichnet, dass** zum gleichzeitigen Wiegen gleichgearteter Wägegüter in einer Vorrichtung eine vorgegebene Anzahl Wägemodule (1) mit einer gleichen Anzahl Lastaufnehmer (5) angeordnet sind, wobei jeder Lastaufnehmer (5) mit jeweils einer Wägezelle (2) verbunden ist und wobei die Lastaufnehmer (5) sich in einer vorgegebenen flächigen Anordnung befinden.

## Claims

1. Weighing module (1) comprising a weighing cell (2) with a load-receiving portion (3) and a stationary portion (4), further comprising a load receiver (5) and an overload protection device (14) that is arranged between the load receiver (5) and the load-receiving portion (3) and serves to protect the weighing cell (2) from being overloaded by static and dynamic forces, **characterized in that** by means of a positioning element (7, 107, 207), the load receiver (5) is positioned relative to the load-receiving portion (3), free of play, at least in the plane that is orthogonal to the load direction, further **characterized in that** when forces are acting on the load receiver (5), the load receiver (5) can be displaced in relation to the load-receiving portion (3) either in the same direction as the load or in both the same as well as the opposite direction of the load, and that due to a exemption formed between the positioning element (7, 107, 207) and the load-receiving portion (3) the load receiver (5) is capable of tipping in all directions when forces are acting on the load receiver (5) at a right angle to the load direction.

2. Weighing module (1) according to claim 1, **characterized in that** the load receiver (5) is guided in load direction relative to the load-receiving portion (3), free of play, by means of a sleeve (12) and the positioning element (7), that the load receiver (5) is positioned under the action of an elastic element (8, 108) with a pre-tension against a stop (11), and that when forces in excess of the pre-tension of the elastic element (8) are acting on the load receiver (5), the load receiver (5) is displaceable in load direction and tiltable in all directions orthogonal to the load direction.

3. Weighing module (1) according to one of the claims 1 or 2, **characterized in that** a fixating member (6, 106, 206) that is firmly connected to the load-receiving portion (3) is rigidly connected to a sleeve (12), and that the positioning element (7, 107, 207) is rigidly attached to the load receiver (5).

4. Weighing module (1) according to one of the claims 1 or 2, **characterized in that** a fixating member (6, 106, 206) that is firmly connected to the load-receiving portion (3) is rigidly connected to the positioning element (7, 107, 207), and that a sleeve (12) is rigidly attached to the load receiver (5).

5. Weighing module (1) according to one of the claims 2 to 4, **characterized in that** the stop (11) is formed on the inside of the sleeve (12), that the stop (11) forms a ring-shaped surface or line lying orthogonal to the load direction, and that a counter-stop (10) belonging to the positioning element (7) and directed against the stop (11) has at least three resting points, wherein the radial dimension of the positioning element (7) in the area of at least three contact points (15) with the inside wall (43) of the sleeve is substantially equal to the radial dimension of the sleeve (12) at said contact points (15).

6. Weighing module (1) according to one of the claims 3 to 5, **characterized in that** the connection between the sleeve (12) and that part to which it is firmly connected is configured to be axially adjustable and securable to allow the adjustment of the spring force of the elastic element (8) against the part to which the sleeve (12) is firmly connected.

7. Weighing module (1) according to one of the claims 5 or 6, **characterized in that** the positioning element (7) is configured in frusto-conical shape with at least three resting points of the counter-stop (10) being arranged at the cone base.

8. Weighing module (1) according to one of the claims 1 to 7, **characterized in that** the positioning element (107, 207) has elastic properties.

9. Weighing module (1) according to one of the claims 5 to 7, **characterized in that** the resting points of the counter-stop (10) lie on a circular surface or a circular ring surface.

10. Weighing module (1) according to one of the claims 2 to 9, **characterized in that** the elastic element (8, 108) is a compressive helix spring.

11. Weighing module (1) according to one of the claims 2 to 10, **characterized in that** the positioning element (7) and, if present, the elastic element (8, 108) and the sleeve (12) are arranged so that their central longitudinal axes that run in the direction in which the force is introduced into the weighing cell (2) coincide with each other at least when the load receiver (5) has assumed its operating position.

12. Weighing module (1) according to one of the claims 1 to 11, **characterized in that** the weighing module (1) has a floor part (17) and that at least one housing stop (19) or a housing groove (81) is formed on a structural component, in particular a housing part (18), that is rigidly connected to said floor part (17), wherein said at least one housing stop (19) and housing groove (81) serve to limit the tilting movement of the load receiver (5) and the displacement in load direction or the displacement in the same direction as well as opposite direction of the load through interaction with the contour of the load receiver (5) or with a bolt collar (71) formed on the load receiver (5).

13. Weighing module (1) according to one of the claims 1 to 12, **characterized in that** the load receiver (5) has a rotation constraint (20) against excessive forces meeting the load receiver (5) at a right angle to the load direction, acting in particular tangentially on the load receiver (5), wherein the rotation constraint (20) engages a housing-connected recess (21).

14. Weighing module (1) according to claim 12, **characterized in that** the load receiver (5) has a bolt collar (71) against excessive forces meeting the load receiver (5) at a right angle to the load direction, acting in particular tangentially on the load receiver (5), wherein the bolt collar (71) engages a housing-connected groove (81).

15. Weighing module (1) according to one of the claims 1 to 14, **characterized in that** at least one fastening area (22) serving for the attachment to a weighing module support is connected to the stationary portion (4), wherein at least one fastening area (22) has a positioning device (16) arranged so that the central longitudinal axis of the overload protection device (14) which, when the latter is in its working condition, runs in the direction in which the force is introduced into the weighing cell (2) and/or the central longitudinal axis of the load receiver (5) which, when the latter is in its working condition, runs in the direction in which the force is introduced into the weighing cell (2), coincides with the central longitudinal axis of the positioning device (16).

16. Weighing module (1) according to claim 15, **characterized in that** each fastening area (22) has a raised seating pad (23, 24).

17. Weighing module (1) according to one of the claims 15 or 16, **characterized in that** the positioning device (16) comprises at least one form-fitting pin.

18. Use of a weighing module (1) according to one of the claims 1 to 17, **characterized in that** for the purpose of simultaneously weighing a plurality of weighing objects of the same kind, a given number of weighing modules (1) with an equal number of load receivers (5) are arranged in a system wherein each load receiver (5) is connected to a weighing cell (2) and wherein the load receivers (5) are arranged in a given two-dimensional layout.

## Revendications

1. Module de pesée (1) comprenant une cellule de pesée (2) présentant une zone de réception de charge (3) et une zone (4) fixe, un récepteur de charge (5) et un dispositif de protection de surcharge (14) disposé entre le récepteur de charge (5) et la zone de réception de charge (3) pour la protection de la cellule de pesée (2) contre la surcharge provoquée par des forces statiques et dynamiques, **caractérisé en ce que** le récepteur de charge (5) est positionné sans jeu au moyen d'un élément de positionnement (7, 107, 207) par rapport à la zone de réception de charge (3) au moins dans le plan perpendiculairement à la direction de charge, le récepteur de charge (5) pouvant être déplacé par rapport à la zone de réception de charge (3), dans le cas de forces s'appliquant sur le récepteur de charge (5), dans la direction de charge respectivement dans et contre la direction de charge et le récepteur de charge (5) peut basculer dans toutes les directions, du fait d'une position libre réalisée entre l'élément de positionnement (7, 107, 207) et la zone de réception de charge (3), dans le cas de forces s'appliquant sur le récepteur de charge (5) perpendiculairement à la direction de charge.

2. Module de pesée (1) selon la revendication 1, **caractérisé en ce que** le récepteur de charge (5) est guidé sans jeu dans la direction de charge par rapport à la zone de réception de charge (3) au moyen d'une douille (12) et de l'élément de positionnement (7), est positionné de façon prétendue contre une butée (11) sous l'effet d'un élément (8, 108) élastique et peut coulisser sur le récepteur de charge (5) dans la direction de charge dans le cas de forces dépassant la force de pré-tension de l'élément (8) élastique, et peut basculer dans toutes les directions perpendiculairement à la direction de charge.

3. Module de pesée (1) selon l'une quelconque des revendications 1 ou 2, **caractérisé en ce qu'**un élément de fixation (6, 106, 206) relié de façon fixe à la zone de réception de charge (3) est relié de façon rigide à une douille (12) et l'élément de positionnement (7, 107, 207) est placé de façon rigide sur le récepteur de charge (5).

4. Module de pesée (1) selon l'une quelconque des revendications 1 ou 2, **caractérisé en ce qu'**un élément de fixation (6, 106, 206) relié de façon fixe à la zone de réception de charge (3) est relié de façon rigide à l'élément de positionnement (7, 107, 207) et une douille (12) est placée de façon rigide sur le récepteur de charge (5).

5. Module de pesée (1) selon l'une quelconque des revendications 2 à 4, **caractérisé en ce que** la butée (11) est réalisée à l'intérieur de la douille (12), forme une surface ou une ligne de forme annulaire, située perpendiculairement à la direction de charge, et une contrebutée (10) dirigée contre la butée (11), de l'élément de positionnement (7) présente au moins trois points d'appui, l'extension radiale de l'élément de positionnement (7) dans la zone d'au moins trois points de contact (15) avec la paroi intérieure de la douille (43) étant sensiblement aussi grande que l'extension radiale de la douille (12) en ces points de contact (15).

6. Module de pesée (1) selon l'une quelconque des revendications 3 à 5, **caractérisé en ce que** la liaison entre la douille (12) et la partie, avec laquelle elle est reliée de façon fixe, est réalisée de façon à pouvoir coulisser axialement et être fixée pour le réglage de la force de ressort de l'élément (8) élastique par rapport à la partie, avec laquelle elle est reliée de façon fixe.

7. Module de pesée (1) selon l'une quelconque des revendications 5 ou 6, **caractérisé en ce que** l'élément de positionnement (7) est conçu en forme de cône tronqué, les au moins 3 points d'appui de la contrebutée (10) étant disposés sur la base.

8. Module de pesée (1) selon l'une quelconque des revendications 1 à 7, **caractérisé en ce que** l'élément de positionnement (107, 207) présente des propriétés élastiques.

9. Module de pesée (1) selon l'une quelconque des revendications 5 à 7, **caractérisé en ce que** les points d'appui de la contrebutée (10) sont situés sur une surface circulaire ou un anneau circulaire.

10. Module de pesée (1) selon l'une quelconque des revendications 2 à 9, **caractérisé en ce que** l'élément (8, 108) élastique est un ressort de pression hélicoïdal.

11. Module de pesée (1) selon l'une quelconque des revendications 2 à 10, **caractérisé en ce que** l'élément de positionnement (7), et, et s'ils sont présents, l'élément (8, 108) élastique et la douille (12) sont disposés de telle sorte que leurs axes longitudinaux médians agencés en direction de l'application de force dans la cellule de pesée (2) coïncident au moins dans les cas où le récepteur de charge (5) a occupé sa position de service.

12. Module de pesée (1) selon l'une quelconque des revendications 1 à 11, **caractérisé en ce que** le module de pesée (1) présente une partie de fond (17) et **en ce que** sur un composant, relié de façon rigide à cette partie de fond (17), en particulier une partie de boîtier (18), est réalisée au moins une butée de boîtier (19) ou une rainure de boîtier (81), qui délimite le mouvement de basculement du récepteur de charge (5) et le mouvement dans la direction de la charge respectivement dans et contre la direction de charge par interaction avec le contour du récepteur de charge (15) ou une collerette de boulon (71) réalisée sur le récepteur de charge (5).

13. Module de pesée (1) selon l'une quelconque des revendications 1 à 12, **caractérisé en ce que** le récepteur de charge (5) présente une limitation de rotation (20) contre des forces trop élevées, agissant perpendiculairement à la direction de charge, s'appliquant en particulier de façon tangentielle sur le récepteur de charge (5), la limitation de rotation (20) s'engageant dans un évidement (21) solidaire du boîtier.

14. Module de pesée (1) selon la revendication 12, **caractérisé en ce que** le récepteur de charge (5) présente une collerette de boulon (71) contre des forces trop élevées, agissant perpendiculairement à la direction de charge, s'appliquant en particulier de façon tangentielle sur le récepteur de charge (5), la collerette de boulon (71) s'engageant dans une rainure de boîtier (81) solidaire du boîtier.

15. Module de pesée (1) selon l'une quelconque des revendications 1 à 14, **caractérisé en ce qu'**au moins une zone de fixation (22) servant à la fixation sur un support de module de pesée est reliée à la zone (4) fixe, au moins une zone de fixation (22) présentant un dispositif de positionnement (16), qui est disposé de telle sorte que l'axe médian longitudinal, agencé en direction de l'application de force dans la cellule de pesée (12), du dispositif de protection de surcharge (14) situé dans sa position de service et/ou du récepteur de charge (5) situé dans sa position de service coïncide avec l'axe médian longitudinal du dispositif de positionnement (16).

16. Module de pesée (1) selon la revendication 15, **caractérisé en ce que** chaque zone de fixation (22) présente une surface d'appui (23, 24) saillante.

17. Module de pesée (1) selon l'une quelconque des revendications 15 ou 16, **caractérisé en ce que** le dispositif de positionnement (16) comprend au moins une goupille d'ajustage.

18. Utilisation d'un module de pesée (1) selon l'une quelconque des revendications 1 à 17, **caractérisé en ce que**, pour la pesée simultanée d'objets à peser de même type, un nombre prédéfini de modules de pesée avec un nombre identique de récepteurs de charge (5) est disposé dans un dispositif, chaque récepteur de charge (5) étant relié à respectivement une cellule de pesée (2) et les récepteurs de charge (5) se trouvant dans un agencement en deux dimensions prédéfini.
